# FASCICULE DE BREVET EUROPEEN

(11) **EP 0 832 905 B1**
(45) Date de publication et mention de la délivrance du brevet: **06.06.2001**
(21) Numéro de dépôt: 97115713.6
(22) Date de dépôt: 10.09.1997
(51) Int. Cl.: C08F 297/08, C08F 4/69

(54) **Procédé de préparation de polyéthylène ayant une distribution large de poids moléculaire**
Verfahren zur Herstellung von Polyethylen mit breiter Molekulargewichtsverteilung
Process for the preparation of polyethylene having a broad molecular weight distribution

(30) Priorité: 13.09.1996 EP 96114683; 07.02.1997 EP 97101976
(43) Date de publication de la demande: 01.04.1998
(73) Titulaire: FINA RESEARCH S.A., 7181 Seneffe (Feluy) (BE)
(72) Inventeur: Debras, Guy, 6210 Fransnes-lez-Gosselies (BE); Vandaele, Hugo, c/o Fina Chemicals Antwerpen, 2030 Antwerpen (BE)

(56) Documents cités:
- EP-A- 0 057 352
- EP-A- 0 570 051
- EP-A- 0 572 003
- EP-A- 0 580 930
- EP-A- 0 603 935
- EP-A- 0 649 860
- US-A- 5 284 613

## Description

La présente invention est relative à un procédé de préparation de polyéthylène ayant une distribution large de poids moléculaire. Plus particulièrement, la présente invention est relative à la préparation de polyéthylène haute, moyenne et basse densité présentant une distribution large ou bimodale de poids moléculaire.

En particulier pour le polyéthylène haute densité, la distribution de poids moléculaire (MWD) est une des propriétés fondamentales qui détermine les propriétés du polymère, et donc de ses applications.

Bien qu'il puisse être difficile d'évaluer l'influence de chacune des propriétés prise de manière indépendante, il est généralement reconnu que le poids moléculaire détermine principalement les propriétés mécaniques tandis que la dispersion de poids moléculaire détermine principalement les propriétés rhéologiques.

Comme une augmentation de poids moléculaire améliore normalement les propriétés physiques des résines, il existe une forte demande pour le polyéthylène à haut poids moléculaire. Cependant ce sont les hauts poids moléculaires qui rendent les polymères plus difficiles à transformer. D'autre part, une augmentation de la MWD a tendance à améliorer l'écoulement à taux de cisaillement élevé pendant la transformation. C'est ainsi que dans des applications exigeant une transformation rapide à assez haut gonflement à la filière comme dans les techniques de soufflage et d'extrusion, l'élargissement de la MWD permet d'améliorer la transformation de polyéthylène à haut poids moléculaire (= faible indice d'écoulement à l'état fondu ou faible MI₂)

On pense que, lorsque le polyéthylène présente à la fois un haut poids moléculaire et une distribution large de poids moléculaire, la transformation est rendue plus facile par la partie de bas poids moléculaire alors que la partie de haut poids moléculaire contribue à une bonne résistance à l'impact du film. Un polyéthylène de ce type peut être transformé en dépensant moins d'énergie avec des rendements plus élevés.

La MWD peut être complètement décrite au moyen de la courbe obtenue par chromatographie en perméation de gel. Toutefois, la MWD est généralement décrite par une valeur qui est une bonne évaluation, également appelée l'indice de polydispersité, et qui présente le rapport entre le poids moléculaire moyen en poids et le poids moléculaire moyen en nombre. En fonction des applications, la MWD requise varie de 10 à 30.

Afin d'obtenir les avantages d'une distribution large, on a d'abord proposé de préparer du polyéthylène ayant une MWD large en mélangeant des polyéthylènes ayant différents poids moléculaires. Cependant, les résultats ne se sont pas avérés satisfaisants car un simple mélange ne se comporte pas comme un mélange intime de polyéthylènes préparés in situ. On a également proposé d'utiliser des réactions en deux étapes dans un réacteur. Des exemples de ces procédés sont décrits dans les publications de brevet GB-A-1.174.542, GB-A-2.020.672 et BE-A-883687.

On a également proposé d'utiliser plusieurs réacteurs connectés en série. A cet égard, on connaît un procédé pour la préparation d'un polymère d'éthylène polymodal dans lequel l'éthylène est polymérisé en deux étapes en présence d'un composé d'organoaluminium contenant un halogène, un composé de métal de transition et différentes quantités d'hydrogène dans chaque étape (brevet britannique n° 1.233.599).

On connaît également un procédé pour la préparation de polymères d'oléfine par une polymérisation en deux étapes, procédé dans lequel le polymère à haut poids moléculaire est préparé lors de la première étape avec un rapport H₂/C₂H₄ bas et le polymère à bas poids moléculaire est préparé dans la deuxième étape avec un rapport H₂/C₂H₄ élevé (demande de brevet EP-A-57 352). Le catalyseur utilisé est, entre autres, un composé d'organoaluminium contenant un halogène ainsi que le produit de la réaction d'un composé organomagnésien contenant de l'oxygène, d'un composé d'organotitane contenant de l'oxygène (ces deux composés étant en solution) et d'un halogénure d'aluminium. Un procédé similaire est décrit dans la demande de brevet EP-A-57 420. On a également proposé un procédé pour polymériser l'éthylène en deux étapes dans lequel la pression dans le second réacteur est maintenue inférieure à celle du premier réacteur; la polymérisation est effectuée en présence d'un catalyseur Ziegler-Natta habituel tel qu'un catalyseur de métal de transition supporté sur un support solide et un composé d'organoaluminium. Des exemples de tels procédés sont décrits dans les brevets US-A-4.414.369 et US-A-4.338.424. Toutefois, les polymères d'éthylène obtenus au moyen de ces procédés ne portent pas de longues chaînes latérales, ce qui est défavorable pour leur aptitude à être transformés. C'est la raison pour laquelle la déposante a mis au point des procédés de production de polyéthylène par la copolymérisation d'éthylène et d'un ou plusieurs comonomères alpha-oléfiniques comportant de 3 à 10 atomes de carbone, dans deux réacteurs de polymérisation à boucle en phase liquide connectés en série, en présence d'un système catalytique constitué du produit de la réaction d'un composé organomagnésien avec un composé de titane, un composé d'organoaluminium et éventuellement un ou plusieurs donneurs d'électrons, d'un catalyseur de métallocène avec un aluminoxane comme cocatalyseur ou d'un catalyseur au chrome, qui ont fait l'objet des demandes de brevet EP-A-580 930 et 649 860.

Toutefois, ces deux procédés présentent l'inconvénient majeur d'être basés sur la production de hautes masses moléculaires très copolymérisées dans le premier réacteur et de basses masses moléculaires dans le second réacteur. Cette configuration est nécessaire par le fait que les poids moléculaires sont régulés par des additions d'hydrogène et qu'il est difficile dans deux réacteurs de polymérisation à boucle en phase liquide connectés en série de produire les basses masses moléculaires d'abord et de dégager l'hydrogène excédentaire entre les deux réacteurs. De plus, le comonomère non incorporé dans les chaînes polymériques produites dans le premier réacteur est entraîné dans le second où il peut réagir et s'incorporer dans les basses masses moléculaires.

Le but de la présente invention consiste, par conséquent, à remédier aux inconvénients précités et à réaliser des polymères d'éthylène haute, moyenne et basse densité ayant une bonne aptitude à la transformation, de bonnes propriétés physiques et notamment mécaniques et dans lesquels il n'y a pas d'incorporation du comonomère dans les basses masses moléculaires.

A cet effet, on prévoit, suivant la présente invention, un procédé de préparation de polyéthylène par l'homopolymérisation d'éthylène ou par la copolymérisation d'éthylène et d'au moins un comonomère alpha-oléfinique comportant de 3 à 10 atomes de carbone, dans deux réacteurs de polymérisation à boucle en phase liquide connectés en série en présence d'un catalyseur au chrome.
L'éthylène et le catalyseur au chrome sont d'abord introduits dans le premier réacteur à une température de 95 à 110°C pour produire un homopolymère d'éthylène de bas poids moléculaire d'un indice de fusion MI₂ d'au moins 1g/10 minutes.
L'homopolymère d'éthylène ainsi obtenu est transféré dans le second réacteur dans lequel on ajoute de l'éthylène et éventuellement un comonomère alpha-oléfinique, à une température de 80 à 90°C pour obtenir un homopolymère ou un copolymère d'éthylène de haut poids moléculaire.

Avantageusement, le catalyseur au chrome est un catalyseur au chrome sur support, activé, ledit catalyseur contenant de préférence 1 % de chrome et son support étant de préférence à base de silice et d'oxyde de titane.

Suivant une forme de réalisation avantageuse de l'invention, le catalyseur a une surface spécifique de 300 à 750 m²/g, avantageusement de 400 à 600 m²/g et un volume poreux de 1 à 3 cm³/g, avantageusement de 1,3 à 2,7 cm³/g.

Suivant une autre forme de réalisation avantageuse de l'invention, la quantité de polymère formé dans le premier réacteur est de 45 à 55 % en poids du polymère total et lorsqu'un comonomère alpha-oléfinique est injecté, il est choisi dans le groupe comprenant le 1-butène, le 1-pentène, le 1-hexène, le 4-méthyl 1-pentène, le 1-heptène et le 1-octène.

L'invention concerne également le polyéthylène à distribution large de poids moléculaire et de très bonne homogénéité ainsi obtenu.

Ainsi qu'on l'a déjà mentionné, l'alimentation en éthylène, le catalyseur au chrome et le cas échéant de l'hydrogène sont injectés dans le premier réacteur à boucle en phase liquide à une température de polymérisation de 95 à 110°C, de préférence de 104 à 109°C pour produire un homopolymère d'éthylène. Ces réacteurs à boucle sont connus en pratique et sont décrits, par exemple, dans les brevets US-A-3.152.872, 3.242.150 et 4.613.484.

On utilisera comme catalyseur n'importe quel type de catalyseur au chrome mais les catalyseurs au chrome sur support activés conviennent particulièrement bien à cet effet. C'est ainsi que l'on a obtenu des rendements en polyéthylène particulièrement intéressants avec des catalyseurs contenant 1 % de chrome sur support à base de silice et d'oxyde de titane, préalablement activés avant leur introduction dans le réacteur dans de l'air à une température de 500 à 900°C, de préférence d'environ 650°C et éventuellement réduits au monoxyde de carbone à une température de 300 à 500°C. On utilisera comme catalyseurs sur support des catalyseurs d'une surface spécifique de 300 à 750 m²/g et de préférence de 400 à 600 m²/g et d'un volume poreux de 1 à 3 cm³/g et de préférence de 1,3 à 2,7 cm³/g. Le temps de séjour de l'éthylène et du catalyseur au chrome dans le premier réacteur est ajusté préférentiellement pour produire de 45 à 55 % en poids du polymère total.

Ainsi qu'on l'a déjà précisé, le premier réacteur est chauffé à une température de 95 à 110°C et préférentiellement à une température de 104 à 109°C afin de donner un produit homopolymère constitué essentiellement de basses masses moléculaires, de haute densité et d'un indice de fusion MI₂ d'au moins 1 g/10 minutes et de préférence supérieur à 2 g/10 minutes.

Suivant l'invention, le courant d'homopolymère d'éthylène obtenu dans le premier réacteur de polymérisation est ensuite transféré dans le second réacteur à boucle, par exemple par l'intermédiaire d'une ou plusieurs jambes de décantation du premier réacteur, comme décrit dans la demande de brevet EP-A-649 860. A ce moment, le second réacteur est également alimenté en éthylène et éventuellement en comonomère alpha-oléfinique tel que, par exemple, du 1-butène, du 1-pentène, du 1-hexène, du 4-méthyl 1-pentène, du 1-heptène, du 1-octène ou un mélange de ceux-ci. La réaction dans ce second réacteur est réalisée à une température de 80 à 90°C, avantageusement de 84 à 86°C, de préférence en présence d'un diluant inerte tel que, par exemple, un hydrocarbure aliphatique ou cycloaliphatique, comme le butane, le pentane, l'hexane, l'heptane, le cyclohexane, le méthylcyclohexane ou un hydrocarbure aromatique, tel que le benzène ou le toluène. Un cocatalyseur du type alkylmétal, de préférence d'alkylaluminium, tel que du triéthylaluminium, ou alumoxane ou boroxane ou alkylbore est préférentiellement ajouté au produit réactionnel du second réacteur de polymérisation pour abaisser l'indice de fusion du produit copolymère obtenu.

Les conditions opératoires dans le second réacteur sont adaptées pour que l'homopolymère ou le copolymère d'éthylène ait un haut poids moléculaire et l'indice de fusion et la densité souhaités. C'est ainsi que le polymère final aura préférentiellement un indice de fusion MI₂ inférieur à 0,1 g/10 minutes.

Bien que la pression de polymérisation dans le premier réacteur soit légèrement plus élevée que celle du second réacteur, on utilisera d'une manière générale une pression allant de 30 à 50 bars et un temps de séjour des réactifs dans chacun des deux réacteurs entre 25 et 90 minutes. C'est ainsi qu'on utilisera avantageusement une pression d'environ 40 bars dans le second réacteur et légèrement plus élevée, telle que, par exemple, 42 bars dans le premier réacteur. En fait, il faut au minimum que le diluant inerte contenant l'éthylène dissous reste liquide et on pourrait donc augmenter la pression si le coût des matériaux des réacteurs ne devenait prohibitif.

Le procédé est généralement réalisé en continu, c'est-à-dire que l'homopolymère d'éthylène constitué de basses masses moléculaires et contenant le catalyseur actif est transféré d'une manière continue dans le second réacteur au moyen d'une ligne de transfert telle que, par exemple, une jambe de décantation du premier réacteur, connectant les deux réacteurs.

L'avantage prépondérant du procédé de l'invention est qu'en adaptant les conditions opératoires de polymérisation dans le premier et le second réacteur, telles que notamment la température et la pression de polymérisation, le choix du catalyseur au chrome, la quantité d'éthylène injecté, l'addition du cocatalyseur, on obtient un polymère d'éthylène final de l'indice de fusion, de la densité et de la distribution de poids moléculaire désirés.

La production d'homopolymère d'éthylène de basse masse moléculaire dans le premier réacteur résoud le problème rencontré dans les demandes de brevet EP-A-580930 et EP-A-649860 où la production de polyéthylène de haute masse moléculaire se fait dans le premier réacteur; ce dernier arrangement provoque inévitablement l'entraînement dans le second réacteur, du comonomère non incorporé dans les chaînes polymériques formées dans le premier réacteur.

On donne ci-après deux exemples non limitatifs décrivant la préparation de polyéthylène suivant le procédé de la présente invention et deux exemples comparatifs.

### Exemples 1 et 2

La copolymérisation d'éthylène a été réalisée avec du 1-hexène dans deux réacteurs à boucle en phase liquide connectés en série, suivant le procédé de polymérisation décrit ci-dessus, sous les conditions spécifiées dans le Tableau 1 ci-après. L'isobutane a été utilisé comme diluant. La concentration en triéthylaluminium (TEAI) est donnée par rapport à la quantité d'isobutane. Le catalyseur est un catalyseur contenant 1 % de chrome sur support de silice et d'oxyde de titane (4 % de titane), activé à 650°C. Il répond aux caractéristiques suivantes :

| | |
|---|---|
| surface spécifique | 443 m²/g; |
| volume poreux | 1,4 cm³/g ; |
| diamètre moyen des pores | 125 Å. |

Les propriétés physiques telles que l'indice de fusion (MI₂), l'indice de fusion sous haute charge (HLMI), le rapport de ces indices HLMI/MI₂ (SR) et la densité ainsi que les propriétés mécaniques (résistance à la fissuration sous contrainte) du produit final sont également données dans le Tableau 1.

### Exemples comparatifs 3 et 4

La copolymérisation d'éthylène avec du 1-hexène a été réalisée dans un seul réacteur sous les conditions réactionnelles indiquées dans le Tableau 1. Les propriétés de la résine monomodale obtenue sont également décrites dans ce tableau.

On constate que les résines de polyéthylène produites par le procédé de l'invention ont pour une densité donnée, une résistance à la fissuration sous contrainte (bell ESCR) bien meilleure et une valeur SR bien supérieure.

**Table 1**

| Exemples | (1) | (2) | (3) | (4) |
|---|---|---|---|---|
| | Deux réacteurs en séries | | Un seul réacteur | |
| Premier réacteur | 70 | 70 | 70 | 70 |
| Volume (L) | | | | |
| Catalyseur | Cr/Support activé à 650°C | | | |
| T (°C) | 106 | 106 | 105 | 103 |
| TEAL (ppm) | 0 | 0 | 0 | 0 |
| Ethylene (kg/h) | 3,1 | 3,1 | 9,3 | 10 |
| 1-Hexene (cc/h) | 0 | 0 | 75 | 87 |
| H₂ (Nl/h) | 0 | 0 | 10 | 10 |
| Isobutane (Kg/h) | 30 | 30 | 26 | 26 |
| Temps de résidence (min) | 71 | 71 | 68 | 66 |

| Gas émis | | | | |
|---|---|---|---|---|
| Ethylène (% en poids) | 1,9 | 1,8 | 4,3 | 4 |
| 1-Hexene (% en poids) | 0 | 0 | | |
| H₂ (% en volume) | 0 | 0 | 0,08 | 0,12 |
| MI₂ (g/10 min.) | 2,1 | 2,4 | 0,09 | 0,09 |
| Densité (g/cc) | 0,964 | 0,964 | | |
| % polymère produit dans le premier réacteur | 51 | 52 | | |

| Second réacteur | | | | |
|---|---|---|---|---|
| Volume (L) | 35 | 35 | | |
| T (°C) | 85 | 84 | | |
| TEAL (ppm) | 0,5 | 1,0 | | |
| Ethylene (kg/h) | 4,0 | 4,1 | | |
| 1-Hexene (cc/h) | 393 | 1073 | | |
| H₂ (Nl/h) | 0 | 0 | | |
| Isobutane (kg/h) | 7 | 7 | | |
| Temps de résidence (min) | 28 | 28 | | |

| Gas émis | | | | |
|---|---|---|---|---|
| Ethylene (% en poids) | 5,8 | 6,1 | | |
| 1-Hexene (% en poids) | 0,46 | 1,0 | | |
| MI₂ (g/10 min) | 0,07 | 0,09 | 0,29 | 0,295 |
| HLMI | 13,2 | 18,6 | 25,3 | 26,9 |
| SR | 189 | 207 | 86 | 91 |
| Densité (g/cm³) | 0,9584 | 0,9567 | 0,9581 | 0,958 |
| Bell ESCR F₅₀ (hres) | 175 | F₀>350 | 57 | 54 |
| 50°C - 100 % antarox | | | | |

## Revendications

1. Procédé de préparation de polyéthylène par l'homopolymérisation d'éthylène ou par la copolymérisation d'éthylène et d'au moins un comonomère alpha-oléfinique comportant de 3 à 10 atomes de carbone, dans deux réacteurs de polymérisation à boucle en phase liquide connectés en série en présence d'un catalyseur au chrome, caractérisé en ce que l'éthylène et le catalyseur au chrome sont d'abord introduits dans le premier réacteur à une température de 95 à 110°C pour produire un homopolymère d'éthylène de bas poids moléculaire d'un indice de fusion MI₂ d'au moins 1 g/10 minutes et en ce que l'homopolymère d'éthylène ainsi obtenu est ensuite transféré dans le second réacteur auquel est ajouté de l'éthylène et éventuellement le comonomère alpha-oléfinique, à une température de 80 à 90°C pour obtenir un homopolymère ou un copolymère d'éthylène de haut poids moléculaire.

2. Procédé suivant la revendication 1, caractérisé en ce que le catalyseur au chrome est un catalyseur au chrome sur support, activé.

3. Procédé suivant la revendication 2, caractérisé en ce que le catalyseur contient 1 % de chrome et son support est à base de silice et d'oxyde de titane.

4. Procédé suivant la revendication 3, caractérisé en ce que le catalyseur a une surface spécifique de 300 à 750 m²/g et un volume poreux de 1 à 3 cm³/g.

5. Procédé suivant la revendication 4, caractérisé en ce que le catalyseur a une surface spécifique de 400 à 600 m²/g et un volume poreux de 1 à 3 cm³/g.

6. Procédé suivant l'une quelconque des revendications 1 à 5, caractérisé en ce que la quantité de polymère formé dans le premier réacteur est de 45 à 55 % en poids du polymère total.

7. Procédé suivant l'une quelconque des revendications 1 à 6, caractérisé en ce que le comonomère alpha-oléfinique, si utilisé, est choisi dans le groupe comprenant le 1-butène, le 1-pentène, le 1-hexène, le 4-méthyl 1-pentène, le 1-heptène et le 1-octène.

8. Procédé suivant l'une quelconque des revendications 1 à 7, caractérisé en ce que la température de polymérisation dans le premier réacteur est de 104 à 109°C et la température de polymérisation dans le second réacteur est de 84 à 86°C.

9. Procédé suivant l'une quelconque des revendications 1 à 8, caractérisé en ce que la pression de polymérisation dans le premier et le second réacteur est de 30 à 50 bars.

10. Procédé suivant l'une quelconque des revendications 1 à 9, caractérisé en ce qu'un cocatalyseur du type alkylmétal, alumoxane ou boroxane est ajouté au second réacteur.

11. Procédé suivant la revendication 10, caractérisé en ce que le cocatalyseur est un alkylaluminium tel que du triéthylaluminium.

12. Procédé suivant l'une quelconque des revendications 1 à 11, caractérisé en ce que le polymère formé dans le premier réacteur a un indice de fusion d'au moins 2 g/10 minutes.

13. Procédé suivant l'une quelconque des revendications 1 à 12, caractérisé en ce que le polymère final a un indice de fusion MI₂ inférieur à 0,1 g/10 minutes.

14. Procédé suivant l'une quelconque des revendications 1 à 13, caractérisé en ce qu'il est réalisé en continu.

## Patentansprüche

1. Verfahren zur Herstellung von Polyethylen durch Homopolymerisation von Ethylen oder durch Copolymerisation von Ethylen und von mindestens einem Alphaolefincomonomer mit 3 bis 10 Kohlenstoffatomen, in zwei in Serie geschalteten Polymerisationsreaktoren, die im Kreislauf in flüssiger Phase arbeiten, in Anwesenheit eines Chromkatalysators, dadurch gekennzeichnet, dass das Ethylen und der Chromkatalysator zuerst in den ersten Reaktor bei einer Temperatur von 95 bis 110°C eingeführt werden, zwecks Herstellung eines Ethylenhomopolymers mit niedrigem Molekulargewicht und einem Schmelzindex MI₂ von mindestens lg/10 Minuten, und dass das so hergestellte Ethylenhomopolymer alsdann in den zweiten Reaktor überführt wird, in welchen Ethylen und gegebenenfalls das Alphaolefincomonomer bei einer Temperatur von 80 bis 90°C hinzugefügt wird, um ein Homopolymer oder ein Copolymer des Ethylens mit hohem Molekulargewicht zu erzeugen.

2. Verfahren gemäß dem Patentanspruch 1, dadurch gekennzeichnet, dass der Chromkatalysator ein sich auf einem Träger befindlicher Chromkatalysator ist und aktiviert worden ist.

3. Verfahren gemäß dem Patentanspruch 2, dadurch gekennzeichnet, dass der Katalysator 1 % Chrom enthält und sein Träger auf der Basis von Kieselerde und Titanoxid beruht.

4. Verfahren gemäß dem Patentanspruch 3, dadurch gekennzeichnet, dass der Katalysator eine spezifische Oberfläche von 300 bis 750 m²/g und ein Porenvolumen von 1 bis 3 cm³/g aufweist.

5. Verfahren gemäß dem Patentanspruch 4, dadurch gekennzeichnet, dass der Katalysator eine spezifische Oberfläche von 400 bis 600 m²/g und ein Porenvolumen von 1 bis 3 cm³/g aufweist.

6. Verfahren gemäß irgendeinem der Patentansprüche 1 bis 5, dadurch gekennzeichnet, dass die Menge des in dem ersten Reaktor gebildeten Polymers sich auf 45 bis 55 Gew.-% des gesamtem Polymers beläuft.

7. Verfahren gemäß irgendeinem der Patentansprüche 1 bis 6, dadurch gekennzeichnet, dass das Alphaolefincomonomer, wenn es zum Einsatz kommt, ausgewählt wird aus der Gruppe bestehend aus 1-Buten, 1-Penten, 1-Hexen, 4-Methyl-1-Penten, 1-Hepten und 1-Okten.

8. Verfahren gemäß irgendeinem der Patentansprüche 1 bis 7, dadurch gekennzeichnet, dass die Polymerisationstemperatur in dem ersten Reaktor bei 104 bis 109°C liegt und die Polymerisationstemperatur in dem zweiten Reaktor bei 84 bis 86°C liegt.

9. Verfahren gemäß irgendeinem der Patentansprüche 1 bis 8, dadurch gekennzeichnet, dass der Polymerisationsdruck in dem ersten und in dem zweiten Reaktor bei 30 bis 50 Bar liegt.

10. Verfahren gemäß irgendeinem der Patentansprüche 1 bis 9, dadurch gekennzeichnet, das ein Katalysator vom Typ eines Alkylmetalls, Alumoxan oder Boroxan in den zweiten Reaktor hinzugefügt wird.

11. Verfahren gemäß dem Patentanspruch 10, dadurch gekennzeichnet, dass der Katalysator ein Alkylaluminium ist, wie etwa Triethylaluminium.

12. Verfahren gemäß irgendeinem der Patentansprüche 1 bis 11, dadurch gekennzeichnet, dass das in dem ersten Reaktor gebildete Polymer einen Schmelzindex von mindestens 2 g/10 Minuten aufweist.

13. Verfahren gemäß irgendeinem der Patentansprüche 1 bis 12, dadurch gekennzeichnet, dass das endgültige Polymer einen Schmelzindex MI₂ aufweist der geringer ist als 0,1 g/10 Minuten.

14. Verfahren gemäß irgendeinem der Patentansprüche 1 bis 13, dadurch gekennzeichnet, dass es auf kontinuierliche Weise durchgeführt wird.

## Claims

1. Method of preparing polyethylene by the homopolymerisation of ethylene or by the copolymerisation of ethylene and at least one alpha-olefin comonomer having 3 to 10 carbon atoms, in two liquid phase polymerisation loop reactors connected in series in the presence of a chromium catalyst, **characterised in that** the ethylene and the chromium catalyst are first introduced into the first reactor at a temperature of between 95 and 110°C to produce an ethylene homopolymer of low molecular weight with a melt-flow index MI₂ of at least lg/10 minutes and in that the ethylene homopolymer thus obtained is then transferred into the second reactor to which is added ethylene and possibly the alpha-olefin comonomer at a temperature of between 80 and 90°C in order to obtain an ethylene homopolymer or copolymer of high molecular weight.

2. Method according to claim 1, **characterised in that** the chromium catalyst is a chromium catalyst on a carrier, activated.

3. Method according to claim 2, **characterised in that** the catalyst contains 1% chromium and its carrier is based on silica and titanium oxide.

4. Method according to claim 3, **characterised in that** the catalyst has a specific surface area of between 300 and 750 m²/g and a pore volume of between 1 and 3 cm³/g.

5. Method according to claim 4, **characterised in that** the catalyst has a specific surface area of between 400 and 600 m²/g and a pore volume of between 1 and 3 cm³/g.

6. Method according to any one of claims 1 to 5, **characterised in that** the quantity of polymer formed in the first reactor is between 45 and 55 % by weight of the total polymer.

7. Method according to any one of claims 1 to 6, **characterised in that** the alpha-olefin comonomer, if used, is selected from the group comprising 1-butene, 1-pentene, 1-hexene, 4-methyl 1-pentene, 1-heptene and 1-octene.

8. Method according to any one of claims 1 to 7, **characterised in that** the polymerisation temperature in the first reactor is between 104 and 109°C and the polymerisation temperature in the second reactor is between 84 and 86°C.

9. Method according to any one of claims 1 to 8, **characterised in that** the polymerisation pressure in the first reactor and in the second reactor is between 30 and 50 bar.

10. Method according to any one of claims 1 to 9, **characterised in that** a cocatalyst of the alkyl metal, alumoxane or boroxane type is added to the second reactor.

11. Method according to claim 10, **characterised in that** the cocatalyst is an alkylaluminium such as triethylaluminium.

12. Method according to any one of claims 1 to 11, **characterised in that** the polymer formed in the first reactor has a melt-flow index of at least 2g/10 minutes.

13. Method according to any one of claims 1 to 12, characterised in that the final polymer has a melt-flow index MI₂ lower than 0.1 g/10 minutes.

14. Method according to any one of claims 1 to 13, **characterised in that** it is carried out continuously.
